Europäisches Patentamt

European Patent Office

Office européen des brevets

(11) Publication number: 0 498 364 A2

# EUROPEAN PATENT APPLICATION

(21) Application number: 92101813.1

(22) Date of filing: 04.02.92

(51) Int. Cl.5: D06H 7/22, B29C 65/08, B29C 65/74

(30) Priority: 05.02.91 IT 3491

(43) Date of publication of application:
12.08.92 Bulletin 92/33

(84) Designated Contracting States:
DE FR GB

(71) Applicant: Gorini, Giuseppe
Via Scornetta, 12
I-40068 San Lazzaro Di Savena (Province of
Bologna)(IT)

(72) Inventor: Gorini, Giuseppe
Via Scornetta, 12
I-40068 San Lazzaro Di Savena (Province of
Bologna)(IT)

(74) Representative: Modiano, Guido et al
MODIANO, JOSIF, PISANTY & STAUB
Modiano & Associati Via Meravigli, 16
I-20123 Milano(IT)

(54) Ultrasonic device for welding and cutting natural, synthetic or mixed fabrics without fraying.

(57) Ultrasonic device for welding and cutting natural, synthetic or mixed fabrics, comprising an ultrasound converter which is operatively coupled to a sonotrode which is constituted by a tool, one end of which cooperates with a working surface and has a welding region and a cutter which is connected to the welding region downstream with respect to the direction of advancement of the material to be welded. Means are provided for the orientatable support of the tool so that the cutter has one end in contact with the working surface and the welding region is raised with respect to the working surface, so as to provide a guide for the insertion of the material to be welded beneath said region and allow the welding of the material along a band whose width corresponds to the width of the welding region and the cutting of the band so as to produce two adjacent welded edges.

Fig. 1

The present invention relates to an ultrasonic device for welding and cutting natural, synthetic or mixed fabrics without fraying, where the term "fabric" designates any type of woven or non-woven material.

Devices of this type for synthetic fabrics are already known, for example from US patent no. 4097327.

However, known devices have some shortcomings that compromise their efficiency, especially as regards the possibility of adapting them to the characteristics of the product, such as thickness, content of synthetic thread and neatness of the cut.

The technical aim of the present invention is therefore to provide a device which allows to obviate the problems of known devices.

Within the scope of this aim, an object of the present invention is to provide a device by means of which it is possible to weld and cut, without waste, even materials which are fully devoid of heat-meltable components.

A further object of the present invention is to provide a device which is capable of performing cuts without fraying and of operating with a significantly lower energy demand than known devices.

This aim and these objects are achieved by a device which comprises an ultrasound converter which is operatively coupled to a sonotrode constituted by a tool which has one end which cooperates with a working surface and is characterized in that said end has a welding region and a cutter connected to said region downstream with respect to the direction of advancement of the material to be welded, means being provided for the orientatable support of said tool so that said cutter has one end in contact with said working surface and said welding region is raised with respect to the working surface, so as to provide a guide for the insertion of the material to be welded below said region and allow the welding of the material along a band whose width corresponds to the width of said region and the cutting of said band so as to produce two adjacent welded edges.

Further details of the invention will become apparent from the following detailed description with reference to the accompanying drawings, wherein:

figure 1 is a lateral elevation view of the device according to the invention in operative position;

figure 2 is a partially sectional lateral elevation view of the device of figure 1 with an enlarged detail;

figure 3 is a front view of the device of figure 1;

figure 4 is a rear view of the device of figure 1;

figure 5 is a lateral elevation view of the device modified for welding and cutting non-heat-weldable natural and synthetic fabrics;

figures 6, 7 and 8 are three views, respectively a lateral view, a rear view and an axial view, of a tool for welding and cutting heat-weldable synthetic fabrics;

figures 9, 10 and 11 are three views, respectively a lateral view, a front view and an axial view, of a tool for welding and cutting non-heat-weldable natural and synthetic fabrics;

figures 12, 13 and 14 are three views, respectively a lateral view, an axial view and a sectional view taken along the plane IX-IX of figure 12, of a tool to which a guide for a welding tape for non-heat-weldable natural and synthetic fabrics is coupled;

figures 15 and 16 are two views, respectively a lateral view and an axial view, of a modified tool;

figure 17 is a view of a further variation of the device;

figure 18 is an axial view of a further tool; and finally

figure 19 is a view of a product which can be obtained with the device of figure 5.

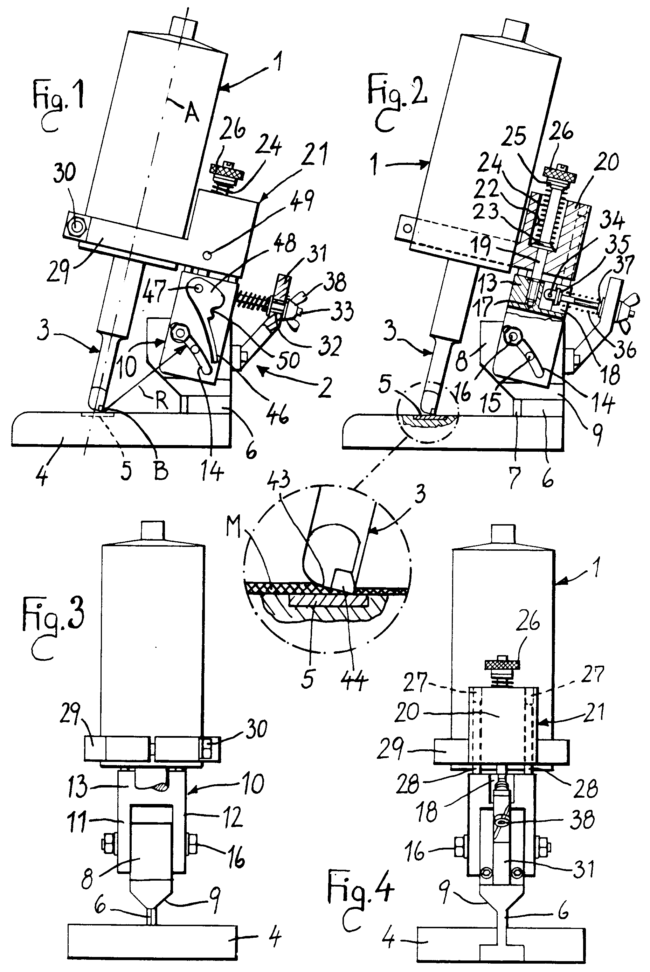

With reference to figures 1-4, the device is composed of an ultrasound converter which is fed by an appropriate electronic generator or other kind of source. The converter is generally designated by the reference numeral 1 and is shown on a support generally designated by 2. For the sake of simplicity in description, the converter is assumed to include a vibrating unit, constituted by a transducer complete with intermediate stages and by a sonotrode 3 having a longitudinal axis A. The sonotrode 3 is in practice a tool, made of treated steel or of another suitable material, which has an active end preset, as it will become apparent hereinafter, for welding and cutting fabric.

The support 2 is formed by a base 4 which has an upper surface which constitutes the working surface, in which a recess is defined; a pad 5 is embedded in said base and acts as abutment for the end of the tool and is co-planar to the surface of the base 4. The pad 5 is made of a very hard material, for example steel or metallic carbide.

A wing 6 rises perpendicular from the base 4 to the rear with respect to the sonotrode 3 and is provided, at the front (i.e. on the side on which the user operates) with a wedge-shaped edge 7.

A rectangular substantially prism-shaped body 8 is rigidly associated on the wing 6 and is blended downward to the wing 6 by chamfers 9 which converge downward.

An element 10 in the shape of an inverted U is articulated to the body 8. The element 10 is composed of two flattened arms 11 and 12 which descend along the sides of the body 8 and are connected at the top by a transverse portion 13 which remains spaced above the body 8.

Respective concentric slots 14 are defined in the arms 11 and 12 and have the shape of an arc of a circle centered on the pad 5 in the point of contact of the sonotrode 3 with the pad 5. A dowel 15, which passes through the body 8, and a bolt 16, which constitutes the element for fixing the element 10 to the body 8, engage in the slots 14. The dowel 15 and the bolt 16 form, together with the slots 14, a guide which allows to angularly orientate the element 10 with respect to the base 4.

A threaded hole 17 and a cavity 18, which are open respectively upward and backward, are furthermore defined in the transverse portion 13.

A stem 19 is screwed in the threaded hole 17 and extends slidingly through a block 20 which constitutes a part of an element 21 for the coupling of the ultrasound converter 1.

The stem 19 passes through a cylindrical seat 22, and a washer 23 arranged on said stem rests on the bottom of said seat.

The washer 23 acts as abutment for a cylindrical spring 24 which is accommodated in the interspace defined between the stem 19 and the inner wall of the seat 22.

The spring 24 rests, with its opposite end and with the interposition of a second washer 25, on a ring 26 which is screwed on the end of the stem 19 which protrudes from the seat 22.

The block 20 is furthermore provided with a pair of parallel holes 27 (figure 4) in which two respective columns 28 are inserted and rise from the portion 13 at the sides of the cavity 18. In this manner, the block 20 can move with respect to the element 10, remaining parallel to itself by virtue of the guiding action performed by the columns 28 in the holes 27.

A clamp is rigidly associated with the block 20 and is composed of two semicircular arms 29 (figure 1) which embrace the converter 1 and secure it by means of a screw 30 which is driven through the ends of said arms.

It should be noted that the position of the clamp on the converter 1 is chosen so that when the sonotrode 3 is in contact with the pad 5, the block 20 is raised with respect to the element 10. In this manner, the sonotrode 3 presses on the pad 5 by virtue of the spring 24, whose force can be set by acting on the ring 26.

In order to be able to orientate the converter 1 with respect to the vertical, there is an adjustment system composed of an L-shaped element 31 which is fixed rearward with respect to the body 8 and protrudes upward.

The L-shaped element 31 is provided, at the top, with an opening 32 through which the threaded portion of a stem 33 is driven; said stem 33 is articulated in the cavity 18 with its opposite end by means of a dowel 34.

A shoulder is defined on the stem 33 and acts as support for a washer 35 against which a spring 36 abuts with one end; said spring 36 abuts, with its other end, on the square 31 with a second washer 37 interposed. A cock nut or ring 38 is screwed on the end of the stem 33 which protrudes from the square 31, and its actuation allows, after slackening the bolt 16, to move the element 8 along the path of the slots 14.

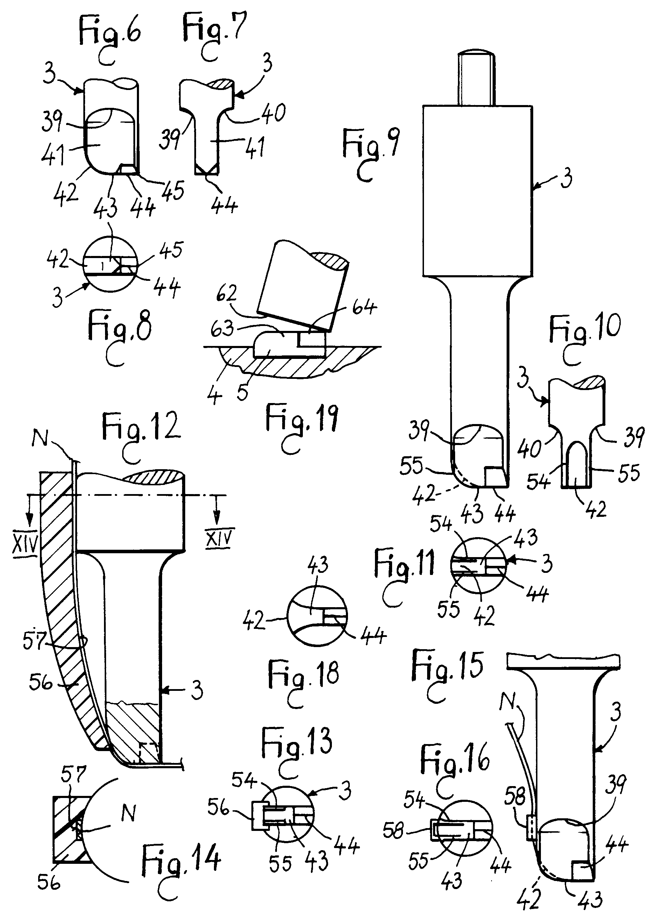

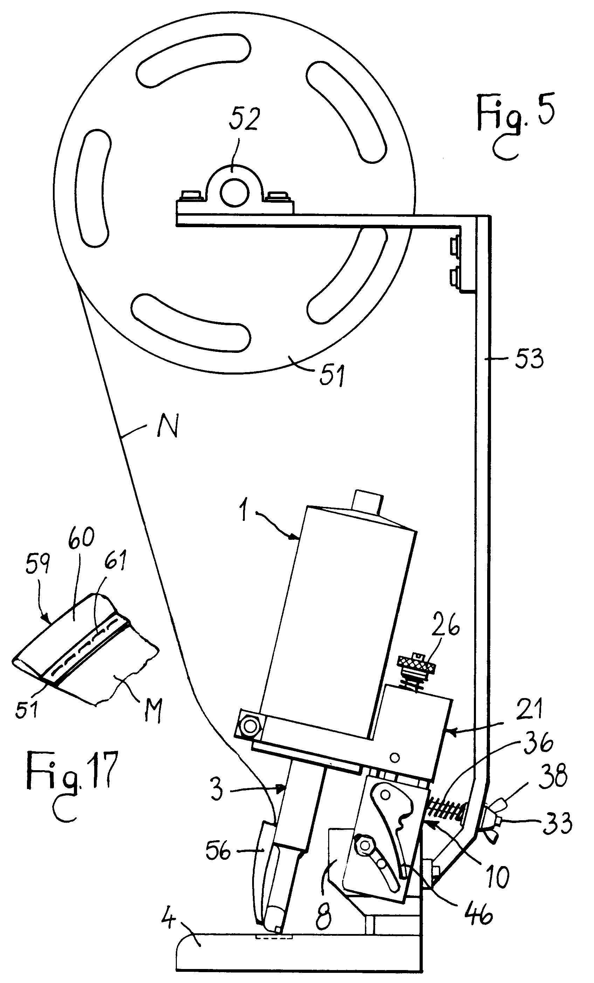

A fundamental characteristic of the described device is the shape of the active end of the tool 3, which is shaped so as to allow to weld and cut the fabric guided beneath it with less pressure and a lower power demand. Figures 6, 7 and 8 illustrate a shape which is particularly suitable for operating on heat-weldable synthetic fabrics. The end of the tool 3 is in fact provided with two recesses 39 and 40 which define a central rib 41. The rib is frontally rounded by a portion 42 which continues with a region 43 which is substantially perpendicular to the axis A. A cutter 44 is connected behind the region 43 and is obtained by chamfering the lower edge of the rib 41 into a V-shape. The cutter 44 is radial with respect to the axis A, and its cutting edge extends tangent to the region 43.

In the operative position of the device, the axis A is inclined with respect to the vertical, so that the tool 3 is in contact with the pad 5 with the rear apex 45 of the cutter 44, so that the region 43 is raised with respect to the pad 5. The point of contact B (figure 1) of the apex 45 on the pad constitutes the center of the radius R of curvature of the slots 14 and thus of the inclination of the sonotrode.

A guide is thus provided which allows to insert the material to be welded and cut between the tool 3 and the pad 5. As it is progressively pushed beneath the tool by the operator, the material undergoes welding at the region 43, which is immediately cut in half by virtue of the cutter 44, so as to provide two separate and adjacent edges which slide along the sides of the rib 6 and separate as the advancement of the material continues.

As can be seen, the described device perfectly achieves the intended aim and objects.

The inclination of the tool 3 facilitates the sliding of the material and a more gradual welding and cutting, which reduce the forming of any creases.

On this subject, it is stressed that as the material advances beneath the tool, the surface layers are heated first and the innermost ones are heated subsequently; this causes a progressive melting of the material and thus a more regular welding and cutting. This allows to weld bands which are proportionally larger than those which can be obtained with conventional methods.

As pointed out by the enlarged detail of figure 2, a reduction in the thickness of the material M occurs during welding and depends on the inclination of the sonotrode 3.

In particular, by acting on the wing nut 38 it is possible to incline the tool 3 more or less sharply about the apex 45, so as to control the melting of the material according to the type (thickness and composition) of the material to be welded. Likewise, by means of the ring 26 it is possible to calibrate the pressure of the tool on the material in order to optimize the quality of the welding and the neatness of the cut.

The inclination and pressure of the tool 3 can be chosen with reference to respective graduated scales which allow to preset the required values without having to resort to empirical adjustments.

According to a characteristic of the invention, the lifting of the converter 1 is provided if this is necessary due to various reasons, such as the accumulation of material beneath the tool, imperfect sliding thereof or others. Lifting is obtained by means of a lever 46 (figure 1) which is articulated at 47 laterally to the element 10 and is provided with a cam-like sector 48 which is suitable for acting on a pivot 49 which protrudes laterally from the block 20 when the lever 46 is raised. The cam 48 has a contour with a progressive radius with respect to the articulation 47 which, when the lever 46 is rotated, acts on the pivot 49 and causes the lifting of the device in contrast with the action of the spring 24; a notch 50 is conveniently defined on the contour of the cam, and the pivot 49 can engage therein in order to retain the converter 1 in a stable lifting position.

The described device is capable of joining by welding two or more superimposed fabrics which are fully synthetic or contain a certain percentage of natural fibers which however is such as to allow welding.

A preferred application of the device consists in the execution of welded hems used for example in the manufacture of curtains, items of clothing, bags, tapes and the like, which would otherwise tend to fray. In particular, the described device allows to provide hems on fabrics which cannot be heat-welded due to their nature, such as for example fabrics made of natural fibers.

A tape or wire of plastic material which can be heat-melted in order to impregnate the fabric is therefore coupled to said fabrics at the hems.

As shown by figure 5, the tape, indicated by N, is wound on a reel 51 which is supported so as to be able to rotate in supports 52 mounted on an arm 53 which rises from the L-shaped element 31, with which it is rigidly associated.

The tape N is guided beneath the tool by a pair of shoulders 54, 55 which run along the edges of the arc-like portion 42 (figures 9, 10 and 11) and prevent lateral deflections thereof. By passing beneath the region 43, the tape N melts, penetrates in the material and is cut by the cutter 44 so as to create two adjacent edges. The fixing of the tape N to the material beneath the region 43 allows to unwind the tape from the reel in step with the advancement of the material.

In an advantageous embodiment, a bridge 56 is associated with the tool (see figures 12, 13 and 14) and is provided, on the inner side, with a channel 57 which is aligned with the arc-like portion 42. The bridge is made of a non-metallic ultrasound-resistant material, such as for example nylon or Teflon.

Said bridge can be associated with the tool by means of elastic rings or can be rigidly associated with the support of the converter and adhere to the tool by means of the pressure exerted by a spring.

The channel 57 is closed by approach to the tool, so that the tape N is unable to disengage in any way from the end of said tool.

A similar solution is proposed in figures 15 and 16, wherein a U-bolt 58 is rigidly associated with the tool 3 so as to form a sliding eyelet for the tape.

For example, the U-bolt is provided by means of a slot of the tool itself, defined by means of an appropriate mechanical machining, such as electrical discharge machining.

The tape may also be coupled below the material instead of above it. The coupling of two tapes above and below the material is furthermore provided for. The lower tape is guided beneath the fabric through an opening of the working surface.

Advantageously, the application of a tape on non-heat-weldable materials allows to form a welding which, when cut longitudinally in half, provides clean edges which can be advantageously used to form tubular hems. In figure 17, the reference numeral 59 designates a tubular hem obtained by folding over an edge 60 of the material M on which the tape N has been welded. The tape N is interposed between the superimposed flaps of the material, so that when heat is applied the two flaps adhere to one another.

An ordinary sewing line 61 finishes the hem and ensures its integrity. It should be noted that the neatness of the welding and cutting does not require the conventional double fold of the edge, with a considerable increase in the economy of the processing.

The described invention is susceptible to numerous further variations, all of which are within the scope of the inventive concept formulated in the claims.

The welding region 43 can have a shape which suits specific requirements. Figure 18 illustrates a tool wherein the welding region 43 is tapered toward the cutter 44 and blends with a wider portion to the front portion 42.

A variation of the invention provides that the end of the tool 3 has a perfectly flat active surface 62 (figure 19) and that the plate 5 is provided with a welding region 63 and with a cutter 64.

In this case, the pad can also be composed of two separate elements, coupled to one another, one of which constitutes the welding region while the other constitutes the cutter.

In an embodiment of the variation of figure 19, the converter has a fixed axis A and the pad 5 can be orientated with respect thereto.

In a further embodiment, racks are provided on the arms 11 and 12, have a radius of curvature which is identical to that of the slots and mesh with respective pinions which are rotatably supported in the body 8, whose actuation determines the angular movement of the converter 1.

A further variation of the invention provides, instead of the plate 5, a rotating abutment, for example constituted by a cylindrical cup-like element which can rotate about a vertical axis or by a disk-like element which can rotate about a horizontal axis, said elements having their edge tangentially in contact with the tool.

Yet another variation of the invention provides a sonotrode which has a planar end which acts on a plurality of abutments, each of which has a weld and a respective cutter.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Ultrasonic device for welding and cutting natural, synthetic or mixed fabrics, comprising an ultrasound converter (1) which is operatively coupled to a sonotrode (3) constituted by a tool which has one end which cooperates with a working surface (4) and is characterized in that said end has a welding region (43) and a cutter (44) connected to said region downstream with respect to the direction of advancement of the material (M) to be welded, means (2) being provided for the orientatable support of said tool along an axis (A) which is inclined with respect to the horizontal, so that said cutter (44) has one end in contact with said working surface (4) and said welding region (43) is raised with respect to the working surface (4), so as to provide a guide for the insertion of the material to be welded below said region (43) and allow the welding of the material along a band whose width corresponds to the width of said region and the cutting of said band so as to produce two adjacent welded edges.

2. Device according to claim 1, characterized in that said means (2) comprise a body (8) which surmounts the working surface (4) and to which a supporting element (10) for an ultrasound source coupling element (1) is articulated, said supporting element (10) being angularly orientatable along an arc of a circle whose center is the point of contact of said cutter (44) with the working surface (4), said coupling element (21) being guided on said supporting element (10) parallel to said axis (A) and being biased by adjustable elastic means (24) toward said working surface.

3. Device according to claim 2, characterized in that said orientatable supporting element (10) is shaped like an inverted U with two arms (11, 12) between which said body (8) extends and in which respective slots (14) are defined, said slots (14) having the shape of an arc of a circle centered in the point (B) of contact of said cutter (44) with the working surface (4), said slots (14) being engaged by a pivot (15) and by a bolt (16) for fixing said element (10) to said body (8).

4. Device according to claim 3, characterized in that said coupling element (21) comprises a block (20) which is provided with holes (17, 27) which are parallel to the axis (A) of the tool (3) and in which a threaded stem (19) and guiding columns (28) which protrude from said element (10) are slidingly engaged, a spring (24) being arranged on said stem (19) and acting by compression between said block (20) and a ring (26) which is screwed on said stem (19), said block (20) being provided with a pair of arms (29) which constitute a clamp for securing said ultrasound converter (1).

5. Device according to any one of claims 2 to 4, characterized in that it comprises a threaded stem (33) which has one end articulated to the supporting element (10) and the opposite end driven through an opening (32) of an L-shaped element (31) which is fixed to said body (8), a spring (36) being arranged on said stem (33) between said element (10) and said L-shaped element (31), a ring (38) suitable for calibrating the compression of said spring (36) being arranged on said end.

6. Device according to any one of claims 2 to 5, characterized in that a lever (46) is articulated to said element (10) and is suitable for acting on said coupling element (21) in order to raise the tool (3) from the working surface (4).

7. Device according to any one of claims 1 to 6, characterized in that the end of said tool is provided with an arc-like portion (42) in front of said welding region (43).

8. Device according to claim 7, characterized in that two shoulders (54, 55) for guiding beneath the tool (3) a tape (N) suitable for being welded onto the fabric (M) extend along the edges of said arc-like portion (42).

9. Device according to claim 7, characterized in that a bridge (56) is associated with the tool (3) and is provided with a channel (57) which is aligned with said arc-like portion (42) in order to guide the tape (N) beneath the active end of the tool (3).

10. Device according to claim 7, characterized in that a U-bolt (58) is rigidly associated with said tool (3) and defines an eyelet for guiding said tape (N) beneath the active end of the tool (3).

11. Device according to any one of claims 8 to 10, characterized in that said tape (N) is wound on a reel (51) which is mounted so as to be able to rotate on an arm (53) which is rigidly associated with said body (8).

12. Device according to any one of the preceding claims, characterized in that said working surface (4) comprises a plate (5) for the abutment of the active end of said tool (3).

13. Device according to any one of the preceding claims, characterized in that said working surface (4) comprises a rotary abutment for the active end of said tool.

14. Device according to any one of claims 1 to 12, characterized in that the active end (62) of said tool is planar and that the working surface (4) comprises at least one plate (5) which is provided with a front welding region (63) and with a cutter (64) which is connected to said region downstream with respect to the advancement direction of the material to be welded.

15. Device according to claim 14, characterized in that said tool (3) is fixed and said plate (5) can be orientated with respect to said tool.

16. Device according to any one of claims 1 to 15, characterized in that the welding region (43) tapers toward the cutter (44).

17. Device according to any one of claims 1 to 16, characterized in that it comprises means for guiding a tape beneath said material to be welded.

Fig.1

Fig.2

Fig.3

Fig.4

Fig.6    Fig.7

Fig.9

Fig.8

Fig.19

Fig.10

Fig.11

Fig.12

Fig.18

Fig.15

Fig.13

Fig.16

Fig.14

Fig. 5

52

51

53

N

Fig. 17

59 60 61

51 M

1

26

21

36

3

38

33

56

10

46

8

4